# EUROPÄISCHE PATENTSCHRIFT

(11) **EP 3 788 351 B1**
(45) Veröffentlichungstag und Bekanntmachung des Hinweises auf die Patenterteilung: **09.09.2026**
(21) Anmeldenummer: 19720762.4
(22) Anmeldetag: 15.04.2019
(51) Int. Cl.: G01N 27/12, B82Y 40/00

(54) **VERFAHREN ZUR HERSTELLUNG EINES CO2-SENSORS UND VERFAHREN ZUR MESSUNG EINER CO2-KONZENTRATION**
METHOD FOR MANUFACTURING A CO2-SENSOR AND METHOD FOR MEASURING A CO2-CONCENTRATION
PROCÉDÉ DE FABRICATION D'UN CAPTEUR DE CO2 ET PROCÉDÉ DE MESURE D'UNE CONCENTRATION EN CO2

(30) Priorität: 04.05.2018 AT 503772018
(43) Veröffentlichungstag der Anmeldung: 10.03.2021
(73) Patentinhaber: Materials Center Leoben Forschung GmbH, 8700 Leoben (AT)
(72) Erfinder: KÖCK, Anton, 1130 Wien (AT); WIMMER-TEUBENBACHER, Robert, 8101 Gratkorn (AT)
(74) Vertreter: Wirnsberger & Lerchbaum Patentanwälte OG
(86) Internationale Anmeldenummer: PCT/AT2019/060127
(87) Internationale Veröffentlichungsnummer: WO 2019/210340

(56) Entgegenhaltungen:
- DE-A1- 4 437 692
- US-A1- 2007 048 181
- STEPHAN STEINHAUER ET AL: "Single CuO nanowires decorated with size-selected Pd nanoparticles for CO sensing in humid atmosphere", NANOTECHNOLOGY, INSTITUTE OF PHYSICS PUBLISHING, BRISTOL, GB, vol. 26, no. 17, 9 April 2015 (2015-04-09), pages 175502, XP020283945, ISSN: 0957-4484, [retrieved on 20150409], DOI: 10.1088/0957-4484/26/17/175502
- STEPHAN STEINHAUER ET AL: "Local CuO Nanowire Growth on Microhotplates: In Situ Electrical Measurements and Gas Sensing Application", ACS SENSORS, vol. 1, no. 5, 2 April 2016 (2016-04-02), pages 503 - 507, XP055599131, ISSN: 2379-3694, DOI: 10.1021/acssensors.6b00042
- MOHIT KUMAR ET AL: "Pd/ZnO nanorods based sensor for highly selective detection of extremely low concentration hydrogen", SCIENTIFIC REPORTS, vol. 7, no. 1, 22 March 2017 (2017-03-22), XP055599143, DOI: 10.1038/s41598-017-00362-x
- JOSHI SHRAVANTI ET AL: "Chemo - Resistive CO2 gas sensor based on CuO-SnO2 heterojunction nanocomposite material", 2015 2ND INTERNATIONAL SYMPOSIUM ON PHYSICS AND TECHNOLOGY OF SENSORS (ISPTS), IEEE, 7 March 2015 (2015-03-07), pages 43 - 48, XP033213453, DOI: 10.1109/ISPTS.2015.7220079
- CHU MANH HUNG ET AL: "On-chip growth of semiconductor metal oxide nanowires for gas sensors: A review", JOURNAL OF SCIENCE: ADVANCED MATERIALS AND DEVICES, vol. 2, no. 3, 2 September 2017 (2017-09-02), pages 263 - 285, XP055599098, ISSN: 2468-2179, DOI: 10.1016/j.jsamd.2017.07.009

## Beschreibung

### Verfahren zur Herstellung eines CO₂- Sensors und Verfahren zur Messung einer CO₂ -Konzentration

Die Erfindung betrifft ein Verfahren zur Herstellung eines Sensors, mit dem eine Konzentration von CO₂ in einem Gas messbar ist.

Des Weiteren betrifft die Erfindung einen Sensor, mit dem eine Konzentration von CO₂ in einem Gas messbar ist.

Schließlich betrifft die Erfindung ein Verfahren zur Messung einer CO₂-Konzentration in einem Gas.

Es ist aus verschiedenen Gründen von Interesse, einen Gehalt von Kohlenstoffdioxid (CO₂) in einem Gas, insbesondere in Luft, messen zu können. Zum einen wird CO₂ als eines jener Gase angesehen, welche zur globalen Erderwärmung beitragen. Zum anderen ist es beispielsweise in Ballungszentren von Belang, bei hohem Schadstoffausstoß lokal auch die Konzentration von CO₂ exakt bestimmen zu können. Darüber hinaus ist eine Bestimmung des CO₂-Gehaltes in einem Gas auch in weiteren Anwendungsgebieten von Relevanz, beispielsweise bei Operationen mit Narkose, wobei der CO₂-Gehalt im Atemgas überwacht wird, oder zur Bestimmung der Ovulationsphase einer Frau anhand des CO₂-Gehaltes im Atemgas.

Vorrichtungen zur Messung einer CO₂-Konzentration in einem Gas wie Luft sind aus dem Stand der Technik seit Langem bekannt. Ein jüngerer Trend geht dahin, diese bekannten, relativ umfassend bauenden Vorrichtungen durch kleinere zu ersetzen, insbesondere miniaturisierte Sensoren. Dies würde es ermöglichen, beispielsweise einen CO₂-Sensor in einem Mobiltelefon zu integrieren. Dadurch würden sich vielfältige Möglichkeiten ergeben. Beispielsweise wäre es möglich, dass ein Mobiltelefonbesitzer an einer beliebigen Position, beispielsweise im Stadtbereich, aber auch im Wohnbereich jederzeit rasch einen CO₂-Gehalt abrufen und mit einem Sollwert vergleichen könnte. Auch ein Atemgas des Mobiltelefonbesitzers könnte ohne Weiteres rasch analysiert werden.

Um entsprechend miniaturisierte Sensoren bereitstellen zu können, ist es des Weiteren bekannt geworden, CO₂-Sensoren herzustellen, die mit Nanowires bzw. Nanodrähten arbeiten. Durch die Anwendung von Nanowires, die in der Regel mit einem Durchmesser im Querschnitt zur Längsachse von wenigen Nanometern (nm) ausgebildet sind, kann sensitiv CO₂ gemessen werden (S. Naama et al., CO2 gas sensor based on silicon nanowires modified with metal nanoparticles, Materials Science in Semiconductor Processing 38, 2015, 367). Durch den Einsatz entsprechend kleiner Komponenten, welche auf eines oder mehrere Gase sensitiv reagieren und für eine Messung in einem Stromkreis integriert sind, kann ein Sensor minimiert werden, da die sensitive Einheit, hier Nanowires bzw. Nanodrähte, platzmäßig minimierte Anforderungen mit sich bringen.

Aus dem Stand der Technik ist es auch bekannt geworden, Kohlenstoffmonoxid (CO) mit Nanowires aus Kupferoxid (CuO) zu messen, wobei die Nanowires auf Mikroheizplatten abgeschieden sind (S. Steinhauer et al., Local CuO Nanowire Growth on Microhotplates: In Situ Electrical Measurements and Gas Sensing Application, ACS Sens. 1, 2016, 503).

Wenngleich es bekannt ist, Nanowires, die gegebenenfalls funktionalisiert sind, für eine Bestimmung von CO₂ in einem Gas einzusetzen, wäre es wünschenswert, ein Verfahren bereitzustellen, mit dem ein CO₂-Sensor auf besonders einfache Weise und mit geeigneter Sensitivität erstellt werden kann.

Hier setzt die Erfindung an. Aufgabe der Erfindung ist es, ein Verfahren der eingangs genannten Art anzugeben, mit dem auf einfache Weise ein zuverlässiger Sensor hergestellt werden kann, der sensitiv für CO₂ ist.

Schließlich ist es ein weiteres Ziel der Erfindung, ein Verfahren zur Messung einer CO₂-Konzentration in einem Gas anzugeben, welches zuverlässig reproduzierbare Messwerte liefert.

Die verfahrensmäßige Aufgabe wird durch die Anspruch 1 definierten Schritte gelöst. Anspruch 11 definiert ein entsprechendes Verfahren zur Messung einer CO₂-Konzentration. Weitere vorteilhafte Aspekte werden durch die abhängigen Ansprüche definiert. Der CO₂ Sensor selbst, der in Folge zu Anschauungszwecken erwähnt wird, fällt jedoch nicht unter den Schutzumfang der Ansprüche. Die Bezeichnung "erfindungsgemäßer Sensor" bezieht sich daher auf die Sensorstruktur, die in den Verfahrensansprüchen 1/11 hergestellt/verwendet wird.

Ein mit der Erfindung erzielter Vorteil ist darin zu sehen, dass ein besonders einfaches Verfahren angegeben wird, mit dem miniaturisierte Sensoren herstellbar sind, die insbesondere auf CO₂ reagieren bzw. für CO₂ sensitiv sind, sodass dessen Gehalt in einem Gas, beispielsweise in der Umgebungsluft, aber beispielsweise auch in einem Abgas einer Verbrennungskraftmaschine zuverlässig bestimmbar ist. Hierfür wird zunächst in einem ersten Schritt ein Substrat bereitgestellt. Bei dem Substrat kann es sich grundsätzlich um ein beliebiges Objekt handeln. Möglich ist es, dass ein Siliciumwafer verwendet wird. Möglich ist es aber auch, dass das Substrat Teil eines elektronischen Chips ist, der später in einem Mobiltelefon verbaut wird. Auf dem Substrat werden mehrere elektrisch leitende Strukturen angeordnet, die einen bestimmten Abstand voneinander aufweisen. In einem nächsten Schritt erfolgt eine Oxidation dieser elektrisch leitenden Strukturen, wobei sich Nanowires bzw. Nanodrähte zwischen den elektrisch leitenden Strukturen ausbilden, die in einen Stromkreis integriert sind oder werden. Schließlich werden die Nanowires zusätzlich mit Nanopartikeln versehen, sodass mit dem Sensor CO₂ messbar ist.

Das erfindungsgemäße Verfahren zeichnet sich damit auch dadurch aus, dass auf einer Vielzahl von Substraten weitgehend beliebige elektrisch leitende Strukturen abgeschieden werden können, womit das Verfahren geometrisch flexibel in Bezug auf vorgegebene räumliche Restriktionen, beispielsweise bei der Integration auf einem elektronischen Chip, ist. Der Abstand zwischen den einzelnen leitenden Strukturen wird dabei so gewählt, dass sich Nanowires bzw. Nanodrähte zur Überbrückung von einer elektrisch leitenden Struktur zur nächsten ausbilden können. Bei den Nanowires selbst handelt es sich aufgrund der vorgesehenen Oxidation um oxidische Nanowires, üblicherweise zusammengesetzt aus einem oder mehreren Oxiden eines Metalls. Durch die zusätzliche Abscheidung von Nanopartikeln auf den Nanowires kann eine Sensitivität letzterer in Bezug auf CO₂ gesteigert werden. Ein derart erstellter Sensor erlaubt eine zuverlässige, reproduzierbare Messung von CO₂, lässt sich einfach herstellen und das Messergebnis ist darüber hinaus zumindest weitgehend unabhängig von einer Feuchtigkeit im untersuchten Gas.

Die Oxidation der elektrisch leitenden Strukturen zur Ausbildung von oxidischen Nanowires zwischen denselben kann grundsätzlich auf beliebige, dem Fachmann bekannte Art durchgeführt werden. Bevorzugt wird die Oxidation im Schritt c) bei erhöhter Temperatur durchgeführt. Die Oxidation kann an Luft durchgeführt werden. Mit anderen Worten: Der in der Luft vorhandene Sauerstoff ist für eine Oxidation zumindest der Oberfläche der elektrisch leitenden Strukturen innerhalb einer praktikablen Zeitspanne völlig ausreichend. Möglich ist es selbstverständlich aber auch, den Sauerstoffgehalt in der oxidierend wirkenden Gasatmosphäre über jenen von Luft anzuheben, wobei auch reiner Sauerstoff zum Einsatz kommen kann. Auch ein Einsatz von Gasgemischen, beispielsweise einer Mischung eines Inertgases wie Argon mit Sauerstoff, ist möglich. Für die Oxidation bei erhöhter Temperatur werden Temperaturen von mehr als 280 °C, vorzugsweise 280 °C bis 420 °C, insbesondere 300 °C bis 400 °C, bevorzugt. Es wurde festgestellt, dass bei Temperaturen von etwa 280 °C Nanowires bzw. Nanodrähte zwischen den in einem Abstand angeordneten elektrisch leitenden Strukturen ausgebildet werden. Bestehen die elektrisch leitenden Strukturen aus Kupfer, wird davon ausgegangen, dass sich bei der Oxidation zunächst Cu₂O bildet, wobei eine Dicke der Kupferschicht unter Ausbildung der Cu₂O-Schicht abnimmt. In weiterer Folge kommt es zur Bildung von CuO auf der Cu₂O-Schicht. Von der CuO-Schicht wachsen anschließend oxidische Nanowires unter Überbrückung eines Abstandes zwischen den elektrisch leitenden Strukturen. Am Ende dieses Wachstumsprozesses ist die elektrisch leitende Struktur, die zu Beginn des Prozesses ausnahmslos aus Kupfer besteht, allenfalls noch im Kern aus Kupfer bestehend und im Übrigen aus Kupferoxiden gebildet. Für die Zwecke der Erstellung eines Sensors im Kontext der gegenständlichen Erfindung wurde gefunden, dass ein optimales Temperaturfenster für die Herstellung entsprechender Strukturen im Temperaturbereich von 280 °C bis 420 °C, insbesondere 300 °C bis 400 °C, liegt.

Die elektrisch leitenden Strukturen sind in der Regel aus einem Metall gebildet, das in der Folge oxidiert wird. Als besonders geeignet haben sich hierfür Kupfer oder Zink erwiesen. Beide Metalle lassen sich zunächst leicht in einer gewünschten Geometrie abscheiden und anschließend unter Ausbildung von Nanowires oxidieren. Dabei ist auch von Vorteil, dass für beide Verfahrensschritte, nämlich Abscheidung des Metalls einerseits und Oxidation desselben andererseits, moderate Temperaturfenster gewählt werden können. Dies ist insbesondere dann wichtig, wenn der Sensor Teil einer größeren Einheit ist, welche sehr hohen Temperaturen nicht standhält, beispielsweise wenn der Sensor auf einem elektronischen Chip platziert ist.

Zum Aufbringen der elektrisch leitenden Strukturen stehen beliebige Methoden zur Verfügung, die es erlauben, mehrere elektrisch leitende Strukturen in einem zuvor gewählten Abstand voneinander auf dem Substrat aufzubringen. Hierzu zählen beispielsweise elektrochemische Abscheidungsprozesse in ausgewählten Bereichen, Verfahren zum gezielten Abtragen von Material wie die Laserablation oder Stamp-Molding-Prozesse. Besonders bevorzugt ist es jedoch, dass die elektrisch leitenden Strukturen im Schritt b) aus der Gasphase abgeschieden werden. Hierfür wird üblicherweise eine Maske verwendet, die auf oder über dem Substrat angeordnet wird. Bei der Maske kann es sich auch um eine solche handeln, die mit fotolithografischen Methoden erstellt wird. Es wird dann eine Schicht aus einem Polymer auf dem Substrat abgeschieden, wonach das Polymer selektiv in jenen Bereichen abgetragen wird, in welchen später die elektrisch leitenden Strukturen gebildet werden sollen. Nach Freilegen der entsprechenden Bereiche können die elektrisch leitenden Strukturen aufgebracht werden, insbesondere durch Abscheidung aus der Gasphase. Möglich ist es auch, dass auf dem Substrat zunächst eine Anbindungsschicht abgeschieden wird, wonach die elektrisch leitenden Strukturen abgeschieden werden. Die Anbindungsschicht liegt dann unterhalb der elektrisch leitenden Strukturen. Die Anbindungsschicht ist lediglich für die Zwecke der Anbindung der darauf abgeschiedenen elektrisch leitenden Strukturen vorgesehen und kann daher relativ dünn gehalten werden, beispielsweise mit einer Dicke von weniger als 100 nm, insbesondere weniger als 50 nm, besonders bevorzugt weniger als 10 nm. Hierfür sind Metalle geeignet, zum Beispiel Titan oder Chrom. Die elektrisch leitenden Strukturen, welche in der Folge für die Ausbildung von Nanowires benötigt werden und auch im Übrigen funktioneller Teil des Sensors sind, werden mit einer Dicke von weniger als 750 nm, vorzugsweise einer Dicke von 200 nm bis 600 nm, abgeschieden.

Ein Abstand der elektrisch leitenden Strukturen kann grundsätzlich in weiten Bereichen frei gewählt werden. Der Abstand sollte allerdings so bemessen sein, dass innerhalb einer vernünftigen Zeitspanne solche Nanowires zwischen den elektrisch leitenden Strukturen gebildet werden, welche auch ausreichende mechanische Stabilität aufweisen. Der Abstand kann daher bevorzugt auf etwa 1 µm bis 6 µm, vorzugsweise 2 µm bis 5 µm, eingestellt werden. Sind die Abstände nicht größer als die angegebenen Maximalwerte, ist eine ausreichende Stabilität der Nanowires zwischen den einzelnen elektrisch leitenden Strukturen gegeben. Die einzelnen Nanowires können sich dabei ohne Nachteil eines Funktionsverlustes auch überlappen und ein dichtes Geflecht zwischen den elektrisch leitenden Strukturen bilden.

Ein mit einem erfindungsgemäßen Verfahren hergestellter Sensor wird bevorzugt bei einer erhöhten Temperatur, beispielsweise im Temperaturfenster von 300 °C bis 400 °C, betrieben. Hierfür kann der Sensor nachträglich mit einem Heizelement versehen oder gekoppelt werden, sodass jener Bereich, in welchem sich die elektrisch leitenden Strukturen und die diese verbindenden Nanowires befinden, auf eine entsprechende Temperatur bringbar ist. Besonders bevorzugt ist es jedoch, dass im Schritt a) ein Substrat bereitgestellt wird, das ein Heizelement umfasst. Dabei ist insbesondere von Vorteil, dass der Oxidationsvorgang und damit die Ausbildung von Nanowires bereits mit dem Heizelement bewirkt werden kann, welches später ohnedies zur Einstellung von erhöhten Messtemperaturen benötigt wird. Dabei kann insbesondere vorgesehen sein, dass das Heizelement eine Mikroheizplatte ist. Die Mikroheizplatte kann eine Abmessung von weniger als 100 µm mal 100 µm aufweisen. Eine Dicke kann kleiner als 20 µm gewählt werden. Bei derartigen Elementen spricht man von mikroelektromechanischen Systemen (MEMS). Ist eine derartige Mikroheizplatte vorgesehen, wird zur Oxidation im Schritt c) eine erhöhte Temperatur durch Heizen mit der Mikroheizplatte eingestellt. Die Mikroheizplatte kann insbesondere auf einem Chip angeordnet sein. Ein solcher Chip kann beispielsweise in einem Mobiltelefon Verwendung finden. Damit in der Folge entsprechend hohe Messtemperaturen möglich sind, wird die Mikroheizplatte von einer Umgebung isoliert und steht lediglich über die erforderlichen elektrischen Kontakte mit den übrigen Bestandteilen eines Chips in Verbindung, sodass auch bei hohen Messtemperaturen im Bereich von 300 °C bis 400 °C keine Beeinträchtigung anderer Einheiten oder Bereiche des elektronischen Chips gegeben ist.

Die Nanopartikel, mit welchen die Nanowires in Bezug auf CO₂ sensibilisiert werden, weisen üblicherweise eine durchschnittliche Größe von weniger als 20 nm, insbesondere weniger als 10 nm, auf. Die Nanopartikel können beispielsweise Zirconiumoxid und/oder Gold enthalten. Ebenfalls verwendet werden können Nanopartikel aus Silber. Auch Nanopartikel aus Bariumcarbonat oder Bariumtitanat sowie beliebige Mischungen dieser Materialien eignen sich.

Die Nanopartikel werden auf die Nanowires mit Beschichtungsverfahren wie Dip-Coating oder dergleichen aufgebracht. Möglich sind auch Prozesse, mit welchen sich ein höherer Grad an Strukturierung erreichen lässt. Hierzu zählt insbesondere das verfahrensmäßig bevorzugte Ink-Jet-Printing. Da die Nanopartikel in der Regel mit organischen Liganden stabilisiert sind, kann es erforderlich sein, die Nanopartikel auf erhöhte Temperatur zu bringen, um damit die organischen Liganden zu verbrennen. Wenn metallische Nanopartikel vorgesehen sind, insbesondere solche aus Gold, können die Nanopartikel auch durch Aufsputtern oder Aufdampfen und nachfolgende Temperaturbehandlung gebildet werden, da sich bei der Temperaturbehandlung eine Separierung des abgeschiedenen Materials in Nanopartikel einstellt.

Das weitere Ziel der Erfindung wird mit einem Sensor erreicht, mit dem eine Konzentration von CO₂ in einem Gas messbar ist, umfassend ein Substrat, mehrere elektrisch leitende Strukturen, die auf dem Substrat in einem vorbestimmten Abstand voneinander angeordnet sind, und oxidische Nanowires, welche durch Oxidation der elektrisch leitenden Strukturen zwischen diesen gebildet sind, wobei auf den Nanowires Nanopartikel mit einer durchschnittlichen Größe von weniger als 20 nm abgeschieden sind, mit welchen Nanopartikel die Nanowires in Bezug auf CO₂ sensibilisiert werden, sodass mit dem Sensor CO₂ messbar ist.

Ein erfindungsgemäßer Sensor zeichnet sich durch eine robuste, einfach herstellbare und stabile Konfiguration aus, mit der CO₂ zuverlässig messbar ist. Der Sensor wird insbesondere bei erhöhten Temperaturen, vorzugsweise in einem Temperaturfenster von 300 °C bis 400 °C, betrieben und ist weitgehend unempfindlich gegenüber Luftfeuchtigkeit. Daher erübrigt sich in der Regel eine gesonderte Kalibrierung diesbezüglich.

Die elektrisch leitenden Strukturen können aus ganz oder teilweise oxidiertem Kupfer oder ganz oder teilweise oxidiertem Zink gebildet sein. Aus den bereits erläuterten Gründen eignen sich sowohl Kupfer als auch Zink in besonderer Weise für eine einfache Herstellung des Sensors.

Die elektrisch leitenden Strukturen sind bevorzugt mit einer Dicke von 750 nm, vorzugsweise einer Dicke von 200 nm bis 600 nm ausgebildet. Entsprechende Dicken sind ausreichend, um bei einem Abstand der elektrisch leitenden Strukturen von etwa 1 µm bis 6 µm vorzugsweise 2 µm bis 5 µm, genügend Material für eine Oxidation und die Ausbildung von Nanowires zur nächstgegenüberliegenden elektrisch leitenden Struktur bereitzustellen.

Wird für die elektrisch leitenden Strukturen Kupfer oder Zink oxidiert, dann sind die Nanowires im Wesentlichen aus Kupferoxid oder Zinkoxid gebildet.

Besonders bevorzugt ist es, dass der Sensor mit einem Heizelement ausgestattet ist. Dies ermöglicht eine Messung einer CO₂-Konzentration bei erhöhten Temperaturen. Das Heizelement ist hierbei so angeordnet, dass sich die relevanten elektrisch leitenden Strukturen sowie die Nanowires auf eine gewünschte Temperatur, beispielsweise im Temperaturfenster von 300 °C bis 400 °C bringen lassen. Hierfür kann das Substrat, das die elektrisch leitenden Strukturen trägt, mit einem weiteren Träger verbunden werden, welcher das Heizelement trägt. Möglich ist es aber auch, dass das Substrat bereits vor der Abscheidung der elektrisch leitenden Strukturen mit einem Heizelement ausgestattet ist. Hierbei kann es sich insbesondere um eine Mikroheizplatte, bevorzugt mit der zuvor hierfür erläuterten Dimensionierung, handeln. Mit der Mikroheizplatte sind dann die elektrisch leitenden Strukturen erwärmbar, insbesondere auf eine Temperatur von mehr als 300 °C. Ist die Mikroheizplatte bereits mit dem Substrat verbunden oder in dieses integriert ehe die elektrisch leitenden Strukturen auf dem Substrat angeordnet werden, übernimmt die Mikroheizplatte oder gegebenenfalls auch eine andere Art eines Heizelementes drei Aufgaben:
i) Einstellung einer erhöhten Temperatur zur Bildung von Nanowires;
ii) Einstellung einer erhöhten Temperatur nach Aufbringen der Nanopartikel, um organische Liganden der Nanopartikel zu verbrennen;
iii) Einstellung einer Messtemperatur, welche höher als die Raumtemperatur ist.

Wenn die Nanopartikel durch Aufdampfen, Aufsputtern oder dergleichen und Separierung bei erhöhter Temperatur gebildet werden, kommt eine vierte Aufgabe hinzu.

Die Mikroheizplatte kann insbesondere auf einem CMOS-Chip angeordnet sein. Dementsprechend kann allgemein ein Chip mit einem erfindungsgemäßen Sensor ausgebildet sein. Möglich ist es auch, dass ein einzelner Chip mehrere Sensoren aufweist.

Im Rahmen der Erfindung wurde festgestellt, dass ein erfindungsgemäßer Sensor insbesondere bei einer Temperatur von mehr als 250 °C eine hohe Sensitivität für CO₂ in einem Gas aufweist. Dementsprechend stellt die Erfindung in einem weiteren Aspekt ein Verfahren zur Messung einer CO₂-Konzentration in einem Gas bereit, wobei ein erfindungsgemäßer Sensor eingesetzt wird und die Messung bei einer Temperatur von mehr als 250 °C, insbesondere mehr als 300 °C erfolgt.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 Schritte einer fotolithografischen Herstellung von elektrisch leitenden Strukturen auf einem Substrat;
Fig. 2a und 2b mögliche Geometrien von elektrisch leitenden Strukturen auf einem Substrat;
Fig. 3 eine rasterelektronenmikroskopische Aufnahme von elektrisch leitenden Strukturen sowie eine Vergrößerung der dazwischen gebildeten Nanowires;
Fig. 4 einen Aufbau eines CO₂-Sensors;
Fig. 5 eine rasterelektronenmikroskopische Darstellung einer in einen Chip integrierten Mikroheizplatte;
Fig. 6 einen schematischen Aufbau eines in einen Chip integrierten CO₂-Sensors;
Fig. 7 ein Diagramm zu CO₂-Messungen.

Ein erfindungsgemäßer Sensor 1 kann grundsätzlich auf beliebigen Substraten 2 hergestellt werden. Nachfolgend sind zwei exemplarische Herstellungsbeispiele dargestellt.

### Herstellungsbeispiel 1

Ein erfindungsgemäßer Sensor 1 kann auf einem Siliciumsubstrat angeordnet werden. Hierfür können Wafer verwendet werden, welche in Stücke einer Größe von von 2 cm mal 2 cm geschnitten werden. Eine Dicke der Wafer kann etwa um 700 µm liegen. Entsprechende Substrate 1 weisen in der Regel ein thermisch oxidiertes Siliciumdioxid mit einer Schichtdicke von 300 nm auf. Diese Oxidschicht kann wichtig sein, wenn mehrere Sensoren 1 parallel auf einem Substrat angeordnet werden.

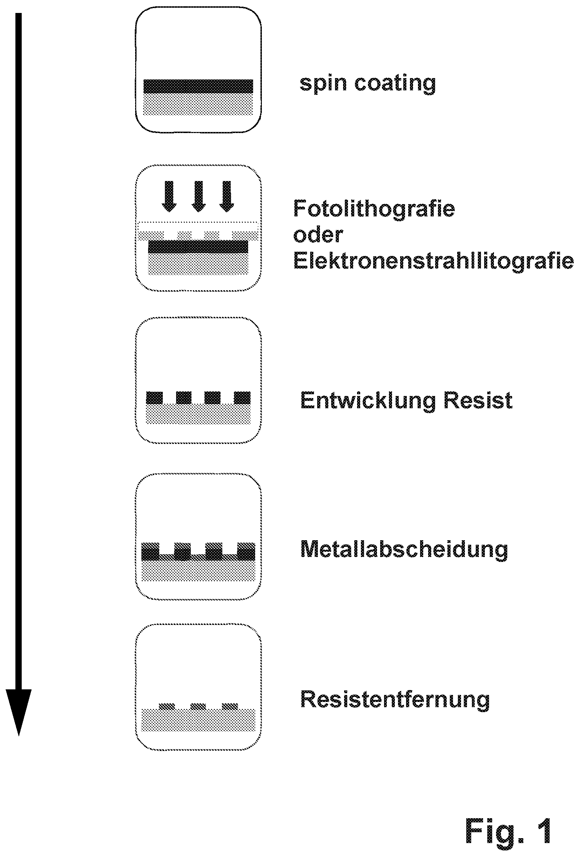

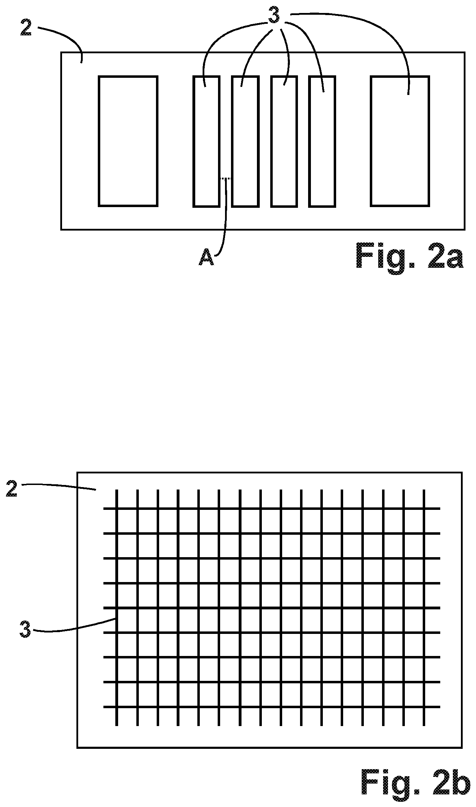

Im Konkreten kann ein Sensor 1 erstellt werden, wenn das Substrat 2 bereitgestellt wird. Anschließend werden mit Fotolithografie und Metallabscheidung oder alternativ Elektronenstrahllitografie elektrisch leitende Strukturen 3 auf dem Substrat 2 angeordnet. Dies ist in Fig. 1 schematisch dargestellt. Es können beliebige geometrische Muster aufgebracht werden. Nicht weiter limitierende Beispiele sind in Fig. 2a und 2b dargestellt.

Als Metall kann beispielsweise Kupfer oder Zink zum Einsatz kommen. Das Metall bildet zunächst die elektrischen Strukturen 3, wie diese in Fig. 2a und Fig. 2b ersichtlich sind, auf dem Substrat 2. Die Abscheidung von Kupfer oder Zink kann in einem Univex Evaporator 450 von Leybold GmbH im Vakuum erfolgen. Typische Schichtdicken der Metalllagen liegen zwischen 200 nm und 600 nm. Möglich ist es auch, vor Abscheidung der elektrisch leitenden Strukturen 3 noch eine dünnere Anbindungslage abzuscheiden, insbesondere aus einem Metall, beispielsweise Titan oder Chrom. Mit der Anbindungslage können Spannungen in den elektrisch leitenden Strukturen 3 vermieden oder zumindest reduziert und eine Haftung verbessert werden. Anschließend erfolgt in einem weiteren Schritt eine thermische Oxidation der elektrisch leitenden Strukturen 3, sodass Nanowires bzw. Nanodrähte zwischen benachbarten elektrisch leitenden Strukturen 3 ausgebildet werden. Ein Abstand A, wie dieser in Fig. 2a ersichtlich ist, kann beispielsweise 2 µm bis 4 µm betragen. In den nachstehenden Tabellen 1 und 2 sind für Kupfer oder Zink als Metall die einzelnen Prozessschritte typische Prozessparameter ersichtlich.

**Tabelle 1: Prozessparameter für Kupferoxid-Nanowires**

| **Schritt 1: Elektronenstrahlithografie** | |
|---|---|
| PMMA Resist | AR-P 672.08 (ALLRESIST) |
| Umdrehungen beim spin coating [U/min] | 2000 |
| Abscheidungsdauer [s] | 60 |
| Temperatur Wärmenachbehandlung [°C] | 180 |
| Dauer Wärmenachbehandlung [s] | 300 |
| Entwickler | AR600-55 (ALLRESIST) |
| Entwicklungsdauer [s] | 15 |
| Stopper | AR600-60 (ALLRESIST) |
| Stoppdauer | 60 |

| **Schritt 2: Thermische Verdampfung** | |
|---|---|
| Metall 1 | Titan |
| Dicke des Metalls 1 [nm] | 5 |
| Metall 2 | Kupfer |
| Dicke des Metalls 2 [nm] | 500 |

| **Schritt 3: Lift-off** | |
|---|---|
| Lösungsmittel | Aceton |
| Dauer [h] | 4 |

| **Schritt 4: Thermische Oxidation** | |
|---|---|
| Oxidationstemperatur [°C] | 335 |
| Oxidationsdauer [h] | 5 |
| Relative Feuchtigkeit [%] | etwa 4 |

**Tabelle 2: Prozessparameter für Zinkoxid-Nanowires**

| **Schritt 1: Elektronenstrahlithografie** | |
|---|---|
| PMMA Resist | AR-P 672.08 (ALLRESIST) |
| Umdrehungen beim spin coating [U/min] | 1000 |
| Abscheidungsdauer [s] | 60 |
| Temperatur Wärmenachbehandlung [°C] | 150 |
| Dauer Wärmenachbehandlung [s] | 180 |
| Entwickler | AR600-56 (ALLRESIST) |
| Entwicklungsdauer [s] | 20 |
| Stopper | AR600-60 (ALLRESIST) |
| Stoppdauer | 30 |

| **Schritt 2: Thermische Verdampfung** | |
|---|---|
| Metall 1 | Titan |
| Dicke des Metalls 1 [nm] | 5 |
| Metall 2 | Zink |
| Dicke des Metalls 2 [nm] | 250 |

| **Schritt 3: Lift-off** | |
|---|---|
| Lösungsmittel | Aceton |
| Dauer [h] | 12 |

| **Schritt 4: Thermische Oxidation** | |
|---|---|
| Oxidationstemperatur [°C] | 400 |
| Oxidationsdauer [h] | 3-5 |

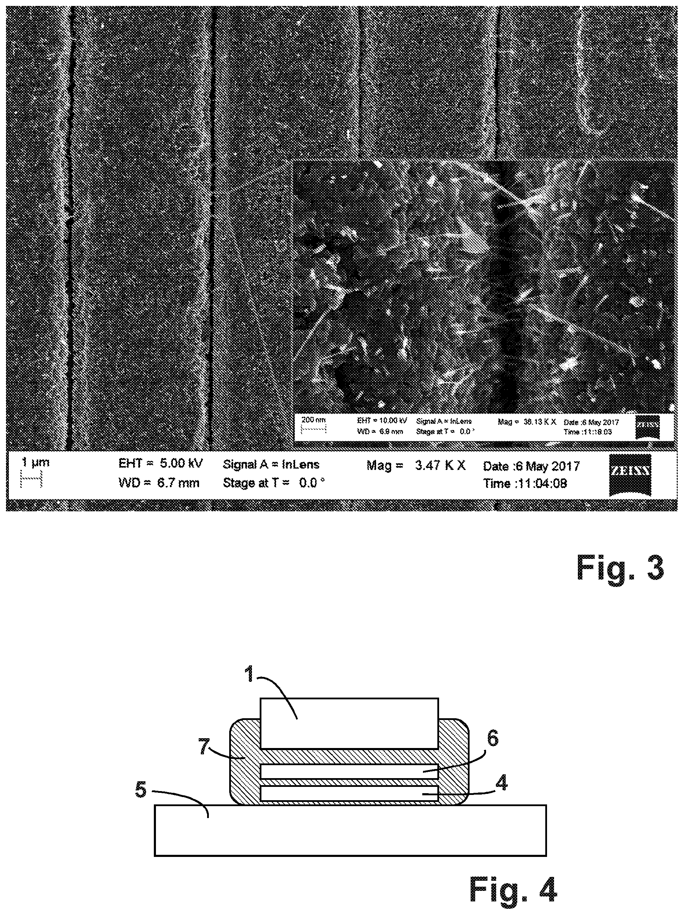

Fig. 3 zeigt eine rasterelektronenmikroskopische Aufnahme von elektrisch leitenden Strukturen 3, welche durch Nanowires verbunden sind. Wie im Ausschnitt ersichtlich, erstrecken sich die einzelnen Nanowires über eine freie Distanz bzw. einen Abstand A zwischen den elektrisch leitenden Strukturen.

Die Nanowires, wie diese in Fig. 3 ersichtlich sind, werden nachfolgend oder gegebenenfalls auch in einem späteren Stadium der Herstellung des Sensors 1 mit Nanopartikeln sensibilisiert. Die Nanopartikel können insbesondere Zirconiumoxid (ZrO₂) und/oder Gold (Au) enthalten. Entsprechende Nanopartikel sind am Markt erhältlich und können eine durchschnittliche Partikelgröße von weniger als 20 nm aufweisen.

Der Sensor 1 ist besonders geeignet zur Messung eines CO₂-Gehaltes in einem Gas, wobei die Messung bei erhöhter Temperatur, insbesondere bei mehr als 200 °C, beispielsweise in einem Temperaturfenster von 300 °C bis 400 °C, erfolgt. Hierfür kann der Sensor 1 einen weiteren Träger 5 aufweisen, welcher ein Heizelement wie eine Mikroheizplatte 4 aufweist und/oder trägt. Dieser Träger 5 samt Heizelement kann mit dem Substrat 2 und den darauf angeordnet elektrisch leitenden Strukturen 3 bzw. dem Sensor 1 durch Kleben bzw. mit einem Kleber 7 verbunden werden. Darüber hinaus kann auch ein Thermoelement 6 vorgesehen sein. Dies ist in Fig. 4 dargestellt. Wie nicht näher dargestellt, sind die einzelnen Komponenten auch elektrisch kontaktiert, soweit dies für eine Messung bzw. einen Betrieb der Komponenten erforderlich ist.

### Herstellungsbeispiel 2

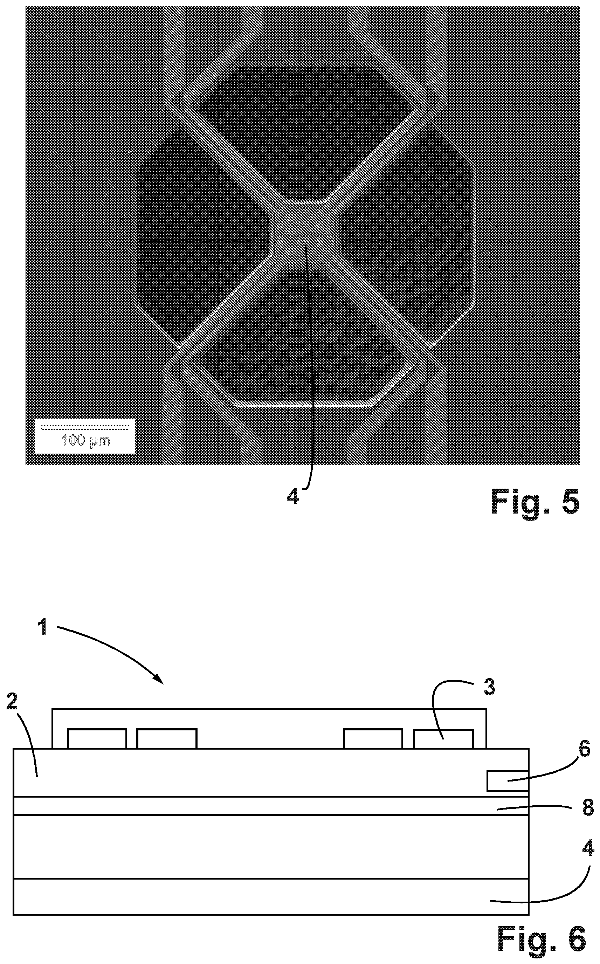

Entsprechend dem Herstellungsbeispiel 1 eignen sich grundsätzlich beliebige Substrate 2 für die Realisierung eines Sensors 1. In einer bevorzugten Variante wird der Sensor 1 auf einem Chip, insbesondere einem CMOS-Chip implementiert, der bereits mit einer Mikroheizplatte 4 ausgebildet ist. Auch eine andere Basis mit einer Mikroheizplatte 4 kann vorgesehen sein. In Fig. 5 ist eine rasterelektronenmikroskopische Draufsicht auf einen Chip dargestellt, in dem eine Mikroheizplatte 4 integriert ist.

In Fig. 6 ist eine schematische Darstellung des Aufbaus wiedergegeben. Über der Mikroheizplatte 4 ist ein Element 8 zur Wärmeverteilung angeordnet, welches allerdings nicht zwingend ist. Darüber ist thermisch isoliert die Sensoranordnung im engeren Sinn angeordnet. Der gesamte Aufbau ist, wie aus Fig. 5 ersichtlich ist, nur durch eine spinnenartige elektrische Verbindung mit dem übrigen Chip verbunden, sonst allerdings frei tragend. Dadurch kann die Mikroheizplatte 4 trotz Integration auf dem Chip beispielsweise ohne Weiteres auf Temperaturen von 400 °C erwärmt werden, ohne dass übrige Bestandteile des Chips in Mitleidenschaft gezogen werden würden. Zu diesem Zweck ist unterhalb der Mikroheizplatte 4 durch Abtragen von Silicium eine Vertiefung vorgesehen. Eine entsprechende Materialabtragung wird durch einen Ätzprozess erreicht. Die gesamte freitragend konzipierte Sensoranordnung samt Mikroheizplatte 4 ausreichend gegen die Umgebung isoliert. Ein Thermoelement 6 kann vorgesehen sein, ist aber nicht zwingend.

### Messergebnisse

Mit einem erfindungsgemäßen Sensor kann insbesondere in einem Temperaturfenster von 300 °C bis 400 °C ein CO₂-Gehalt besonders sensitiv durch eine Widerstandsmessung bestimmt werden. Dabei sind die Messergebnisse weitgehend unabhängig von einer Luftfeuchtigkeit im untersuchten Gas. Dies bedeutet, dass für viele Zwecke eine Kalibrierung nicht erforderlich ist.

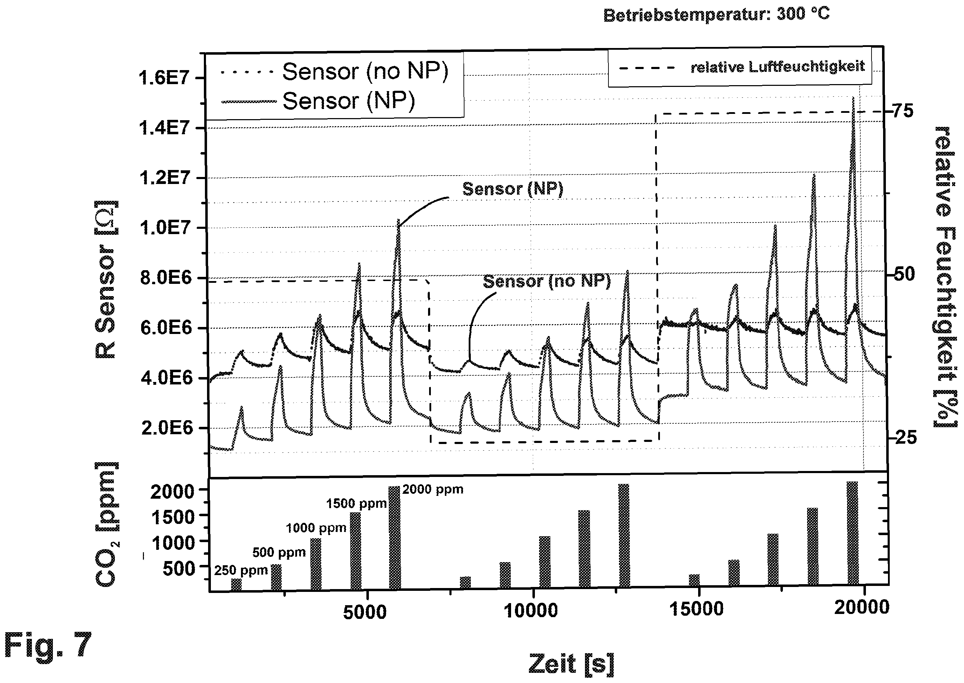

Wie aus Fig. 7 ersichtlich ist, reagiert ein Sensor 1, hergestellt nach einem der zwei vorstehenden Herstellungsbeispiele, empfindlich auf eine Variation der CO₂-Konzentration. Eine Betriebstemperatur betrug bei den Messungen, die in Fig. 7 dargestellt sind, 300 °C. Wie ersichtlich ist, sind die Messergebnisse lediglich in einem akzeptabel geringen Maß von der Luftfeuchtigkeit abhängig, die entsprechend der strichlierten Linie zwischen 25 % und 75 % variiert wurde. Ersichtlich ist auch, dass im relevanten Konzentrationsbereich von 250 ppm bis 2000 ppm die Messergebnisse mit den als Rechtecken dargestellten CO₂-Pulsen korrelieren. Bei Anwesenheit von CO₂-Molekülen kommt es zu einem Ladungsträgeraustausch (Elektronen-Transfer) zwischen der gassensitiven Oxidlage und den CO₂-Molekülen. Der elektrische Widerstand dieser Sensorschicht steigt mit zunehmender CO₂-Konzentration.

Ein erfindungsgemäßer Sensor 1 kann in einfacher Weise hergestellt werden, ist robust und eignet sich zur Messung einer CO₂-Konzentration in einem Gas insbesondere auch bei erhöhten Temperaturen. Insbesondere kann ein solcher Sensor 1 auf einem elektronischen Chip integriert werden, beispielsweise in Kombination mit einer Mikroheizplatte 4. Die Mikroheizplatte 4 kann dann bereits während der Herstellung zur Oxidation der elektrisch leitenden Strukturen 3 sowie zur Verbrennung organischer Bestandteile abgeschiedener Nanopartikel eingesetzt werden, was eine einfache Herstellung begünstigt. Darüber hinaus stellt die Mikroheizplatte 4 im Betrieb die gewünscht hohen Temperaturen für eine Bestimmung eines CO₂-Gehaltes sicher. Durch die isolierte Anordnung der Mikroheizplatte 4 samt Sensor 1 lässt sich eine entsprechende Sensoranordnung auf einem elektronischen Chip integrieren, da lediglich lokal hohe Temperaturen erreicht werden, welche für die Umgebung unerheblich sind.

Ein erfindungsgemäßer Sensor 1 kann neben den eingangs erwähnten Anwendungsgebieten auch für eine Reihe weiterer Einsatzzwecke vorgesehen sein, zum Beispiel zur Überwachung der Raumluft in Gebäuden, zur Überprüfung einer Arbeitsatmosphäre einer Person oder zur Zustandsüberwachung bei Maschinen, welche durch Abrieb oder andere Prozesse Gase freisetzen, die auf den Zustand der Maschine schließen lassen.

## Patentansprüche

1. Verfahren zur Herstellung eines CO₂-Sensors (1), mit dem eine Konzentration von CO₂ in einem Gas messbar ist, umfassend folgende Schritte:
a) Bereitstellen eines Substrates (2);
b) Anordnen von mehreren elektrisch leitenden Strukturen (3) auf dem Substrat (2) in einem vorbestimmten Abstand (A) voneinander;
c) Oxidation der elektrisch leitenden Strukturen (3) unter Ausbildung von oxidischen Nanowires zwischen den elektrischen leitenden Strukturen (3);
d) Abscheiden von Nanopartikeln auf den Nanowires, sodass mit dem Sensor (1) CO₂ messbar ist.

2. Verfahren nach Anspruch 1, wobei die Oxidation im Schritt c) bei erhöhter Temperatur durchgeführt wird, vorzugsweise bei einer Temperatur von mehr als 280 °C, vorzugsweise bei 280 °C bis 420 °C, insbesondere bei 300 °C bis 400 °C.

3. Verfahren nach Anspruch 1 oder 2, wobei die elektrisch leitenden Strukturen (3) aus Kupfer oder Zink ausgebildet werden.

4. Verfahren nach einem der Ansprüche 1 bis 3, wobei die elektrisch leitenden Strukturen (3) im Schritt b) aus der Gasphase abgeschieden werden.

5. Verfahren nach einem der Ansprüche 1 bis 4, wobei im Schritt b) auf dem Substrat (2) eine Anbindungsschicht abgeschieden wird, wonach die elektrisch leitenden Strukturen (3) abgeschieden werden.

6. Verfahren nach einem der Ansprüche 1 bis 5, wobei die elektrisch leitenden Strukturen (3) mit einer Dicke von weniger als 750 nm, vorzugsweise einer Dicke von 200 nm bis 600 nm, abgeschieden werden.

7. Verfahren nach einem der Ansprüche 1 bis 6, wobei der Abstand (A) auf etwa 1 µm bis 6 µm, vorzugsweise 2 µm bis 5 µm, eingestellt wird.

8. Verfahren nach einem der Ansprüche 1 bis 7, wobei im Schritt a) ein Substrat (2) bereitgestellt wird, das ein Heizelement umfasst.

9. Verfahren nach einem der Ansprüche 1 bis 8, wobei im Schritt d) Nanopartikel mit einer durchschnittlichen Größe von weniger als 20 nm, insbesondere weniger als 10 nm, auf den Nanowires abgeschieden werden.

10. Verfahren nach Anspruch 9, wobei Nanopartikel Zirconiumoxid und/oder Gold enthalten.

11. Verfahren zur Messung einer CO₂-Konzentration in einem Gas, wobei ein CO₂-Sensor (1), mit dem eine Konzentration von CO₂ in einem Gas messbar ist, eingesetzt wird, wobei der CO₂-Sensor (1) ein Substrat (2), mehrere elektrisch leitende Strukturen (3), die auf dem Substrat (2) in einem vorbestimmten Abstand (A) voneinander angeordnet sind, und oxidische Nanowires, welche durch Oxidation der elektrisch leitenden Strukturen (3) zwischen diesen gebildet sind, wobei auf den Nanowires Nanopartikel abgeschieden sind, sodass mit dem Sensor (1) CO₂ messbar ist, umfasst und wobei die Messung bei einer Temperatur von mehr als 250 °C, insbesondere mehr als 300 °C, erfolgt.

12. Verfahren nach Anspruch 11, wobei die elektrisch leitenden Strukturen (3) des CO₂-Sensors (1) aus ganz oder teilweise oxidiertem Kupfer oder ganz oder teilweise oxidiertem Zink gebildet sind.

13. Verfahren nach Anspruch 11 oder 12, wobei die elektrisch leitenden Strukturen (3) des CO₂-Sensors (1) mit einer Dicke von weniger als 750 nm, vorzugsweise einer Dicke von 200 nm bis 600 nm, ausgebildet sind.

14. Verfahren nach einem der Ansprüche 11 bis 13, wobei ein Abstand (A) zwischen den elektrisch leitenden Strukturen (3) des CO₂-Sensors (1) etwa 1 µm bis 6 µm, vorzugsweise 2 µm bis 5 µm, beträgt.

## Claims

1. A method for producing a CO₂ sensor (1) with which a concentration of CO₂ in a gas can be measured, comprising the following steps:
a) providing a substrate (2);
b) disposing a plurality of electrically conductive structures (3) on the substrate (2) with a predetermined spacing (A) from one another;
c) oxidizing the electrically conductive structures (3) to form oxide nanowires between the electrically conductive structures (3);
d) depositing nanoparticles on the nanowires, so that CO₂ can be measured using the sensor (1).

2. The method as claimed in claim 1, wherein the oxidation in step c) is carried out at elevated temperature, preferably at a temperature of more than 280°C, preferably at 280°C to 420°C, in particular at 300°C to 400°C.

3. The method as claimed in claim 1 or claim 2, wherein the electrically conductive structures (3) are formed from copper or zinc.

4. The method as claimed in one of claims 1 to 3, wherein the electrically conductive structures (3) in step b) are deposited from the gas phase.

5. The method as claimed in one of claims 1 to 4, wherein in step b), a connection layer is deposited on the substrate (2), after which the electrically conductive structures (3) are deposited.

6. The method as claimed in one of claims 1 to 5, wherein the electrically conductive structures (3) are deposited with a thickness of less than 750 nm, preferably a thickness of 200 nm to 600 nm.

7. The method as claimed in one of claims 1 to 6, wherein the spacing (A) is set to approximately 1 µm to 6 µm, preferably 2 µm to 5 µm.

8. The method as claimed in one of claims 1 to 7, wherein in step a), a substrate (2) which comprises a heating element is provided.

9. The method as claimed in one of claims 1 to 8, wherein in step d), nanoparticles with a mean size of less than 20 nm, in particular less than 10 nm, are deposited on the nanowires.

10. The method as claimed in claim 9, wherein the nanoparticles contain zirconium oxide and/or gold.

11. A method for measuring a CO₂ concentration in a gas, wherein a CO₂ sensor (1), with which a concentration of CO₂ in a gas can be measured, is used, wherein the CO₂ sensor (1) comprises a substrate (2), a plurality of electrically conductive structures (3) which are disposed on the substrate (2) with a predetermined spacing (A) from one another, and oxide nanowires which are formed by oxidation of the electrically conductive structures (3) between them, wherein nanoparticles are deposited on the nanowires so that CO₂ can be measured with the sensor (1), and wherein the measurement is carried out at a temperature of more than 250°C, in particular more than 300°C.

12. The method as claimed in claim 11, wherein the electrically conductive structures (3) of the CO₂ sensor (1) are formed from completely or partially oxidized copper or completely or partially oxidized zinc.

13. The method as claimed in claim 11 or claim 12, wherein the electrically conductive structures (3) of the CO₂ sensor (1) are formed with a thickness of less than 750 nm, preferably a thickness of 200 nm to 600 nm.

14. The method as claimed in one of claims 11 to 13, wherein a spacing (A) between the electrically conductive structures (3) of the CO₂ sensor (1) is approximately 1 µm to 6 µm, preferably 2 µm to 5 µm.

## Revendications

1. Procédé de fabrication d'un capteur de CO₂ (1) permettant de mesurer la concentration de CO₂ dans un gaz, comprenant les étapes suivantes :
a) mise à disposition d'un substrat (2) ;
b) mise en place, sur le substrat (2), de plusieurs structures (3) électriquement conductrices dont l'écartement (A) les unes des autres est prédéterminé ;
c) oxydation des structures (3) électriquement conductrices provoquant la formation de nanofils entre des structures (3) électriquement conductrices ;
d) dépôt de nanoparticules sur lesdits nanofils, permettant ainsi de mesurer du CO₂ avec le capteur (1).

2. Procédé selon la revendication 1, l'oxydation dans l'étape c) étant réalisée à une température élevée, préférentiellement à une température supérieure à 280 °C, préférentiellement comprise entre 280 °C et 420 °C, notamment comprise entre 300 °C et 400 °C.

3. Procédé selon les revendications 1 ou 2, les structures (3) électriquement conductrices étant formées à partir de cuivre ou de zinc.

4. Procédé selon l'une des revendications 1 à 3, les structures (3) électriquement conductrices étant déposées, à l'étape b), à partir d'une phase gazeuse.

5. Procédé selon l'une des revendications 1 à 4, dans lequel on dépose, à l'étape b), une couche de liaison sur le substrat (2), pour ensuite déposer les structures (3) électriquement conductrices.

6. Procédé selon l'une des revendications 1 à 5, les structures (3) électriquement conductrices étant déposées de manière à atteindre une épaisseur inférieure à 750 nm, préférentiellement une épaisseur comprise entre 200 nm et 600 nm.

7. Procédé selon l'une des revendications 1 à 6 ; l'écartement (A) étant ajusté de manière à être compris entre environ 1 µm et 6 µm, préférentiellement entre 2 µm et 5 µm.

8. Procédé selon l'une des revendications 1 à 7, l'étape a) consistant à mettre à disposition un substrat (2) comprenant un élément chauffant.

9. Procédé selon l'une des revendications 1 à 8, l'étape d) consistant à déposer, sur lesdits nanofils, des nanoparticules dont la taille moyenne est inférieure à 20 nm, notamment inférieure à 10 nm.

10. Procédé selon la revendication 9, lesdites nanoparticules contenant de l'oxyde de zirconium et/ou de l'or.

11. Procédé de mesure d'une concentration de CO₂ dans un gaz, mettant en œuvre un capteur (1) de CO₂ qui est capable de mesurer une concentration de CO₂ dans un gaz, le capteur (1) de CO₂ comprenant un substrat (2), plusieurs structures (3) électriquement conductrices qui sont disposées sur le substrat (2) avec un écartement (A) prédéterminé les unes des autres, et des nanofils d'oxyde lesquels sont formés entre les structures (3) électriquement conductrices par oxydation de ces dernières, des nanoparticules étant déposées sur lesdits nanofils, pour faire en sorte que le capteur (1) soit capable de mesurer du CO₂, et la mesure étant réalisée à une température supérieure à 250 °C, notamment supérieure à 300 °C.

12. Procédé selon la revendication 11, les structures (3) électriquement conductrices du capteur (1) de CO₂ étant formées à partir de cuivre complètement ou partiellement oxydé ou de zinc complètement ou partiellement oxydé.

13. Procédé selon les revendications 11 ou 12, les structures (3) électriquement conductrices du capteur (1) de CO₂ étant formées de manière à ce que leur épaisseur soit inférieure à 750 nm, leur épaisseur étant préférentiellement comprise entre 200 nm et 600 nm.

14. Procédé selon l'une des revendications 11 à 13, un écartement (A) entre les structures (3) électriquement conductrices du capteur (1) de CO₂ étant compris entre environ 1 µm et 6 µm, préférentiellement entre 2 µm et 5 µm.
